# EUROPEAN PATENT APPLICATION

(11) **EP 2 465 677 A1**
(43) Date of publication of application: **20.06.2012**
(21) Application number: 09848249.0
(22) Date of filing: 19.10.2009
(51) Int. Cl.: B32B 33/00

(54) **DECORATIVE SHEET**

(30) Priority: 11.08.2009 JP 2009186260
(71) Applicant: Yamato Grand Co., Ltd., Aichi 451-0025 (JP)
(72) Inventor: KAWAI, Shogo, Nagoya-shi Aichi 451-0025 (JP); KOSHIHARA, Atsushi, Nagoya-shi Aichi 451-0025 (JP)
(74) Representative: Goddar, Heinz J.
(86) International application number: PCT/JP2009/005461
(87) International publication number: WO 2011/018830

(57) **Abstract**

[Problem to be Solved] There is provided a decorative sheet which is not limited in color, has a simple structure and excellent display performance, and can give a three-dimensional feeling.

[Solution] The present invention resides in the decorative sheet (100) comprising a transparent sheet (10), a first bright part (1) formed on the back side of the transparent sheet (10), and a second bright part (2) which is formed on the back side of the transparent sheet (10) and adjoins the first bright part (1), wherein the first bright part (1) has at least a white layer, and the second bright part (2) has a color layer which is other than the white layer and contains at least a bright pigment.

## Description

### Technical Field

The present invention relates to decorative sheets and more particularly relates to a decorative sheet which can give a three-dimensional feeling rich in decorativeness.

### Background Art

Decorative sheets are used in applications such as decoration of mobile phones, interior decoration of automobiles, and decoration of electric appliances. Such a decorative sheet is generally used a transparent film provided with a coloring agent.

In recent years, good design characteristics have been demanded, so that decorative sheets with various decorations have been developed.
For example, a decorative sheet, in which at least a transparent salient layer is formed on a substrate sheet surface, a decorative pattern layer is formed on the salient layer, and a pattern masking layer is formed thereon, and which shows a decoration that changes when viewed from different directions, is known (for example, see Patent Document 1).
In addition, a dressed lumber having the whole coating surface on which a recessed and projected pattern with brightness is formed to give a three-dimensional feeling is known (for example, see Patent Document 2).

### Prior Art Documents

### Patent Documents

Patent Document 1
   Japanese Patent Application Laid-Open Publication No. 2004-106490
Patent Document 2
   Japanese Patent Application Laid-Open Publication No. 8-244174

### Summary of the Invention

### Problems that the Invention is to Solve

However, the decorative sheet described in the above Patent Document 1 does not always give any three-dimensional feeling, and the dressed lumber described in the above Patent Document 2 is poor in decorative display performance.
As a technique for giving a three-dimensional feeling, other than the above-mentioned methods, for example, a method of utilizing a metal finish or a tint in a layer of a color (hereinafter referred to as "color layer") is also known, but its operation is complicated, and available colors are also limited.

The present invention has been made in view of the above-mentioned circumstances, and is directed to providing a decorative sheet which has a simple structure and excellent decorative display performance, is not limited in color, and can give a three-dimensional feeling.

### Means for Solving the Problems

When the inventors of the present invention have earnestly made consideration to solve the above-mentioned problem, they have found out that a white layer has a property of inhibiting reflection of light although having a specific lightness and the above-mentioned problem can surprisingly be solved by incorporating the white layer into either one of first and second bright parts which adjoin each other.

The present invention resides in (1) a decorative sheet comprising: a transparent sheet; a first bright part formed on the back side of the transparent sheet; and a second bright part which is formed on the back side of the transparent sheet and adjoins the first bright part, wherein the first bright part has at least a white layer; and the second bright part has a color layer which is other than the white layer and contains at least a bright pigment.

The present invention resides in (2) the decorative sheet according to (1) as described above, wherein the second bright part has a plurality of color layers; the first color layer closer to the transparent sheet of the second bright part contains a pigment other than any bright pigment; and the second color layer laminated on the back side of the first color layer contains a bright pigment.

The present invention resides in (3) the decorative sheet according to (1) or (2) as described above, wherein the first bright part has a plurality of color layers; the first color layer closer to the transparent sheet of the first bright part is a white layer; and the second color layer laminated on the back side of the first color layer contains a bright pigment.

The present invention resides in (4) the decorative sheet according to (1) or (2) as described above, wherein the first bright part has a plurality of color layers; the first color layer closer to the transparent sheet of the first bright part contains a pigment other than any bright pigment; the second color layer laminated on the back side of the first color layer is a white layer; and the third color layer laminated on the back side of the second color layer contains a bright pigment.

The present invention resides in (5) the decorative sheet according to any one of (1) to (4) as described above, wherein the first and/or second bright parts have a plurality of color layers which are other than a white layer and contain at least a bright pigment.

The present invention resides in (6) the decorative sheet according to any one of (1) to (5) as described above, wherein the white layer is an aggregate of dots; and a rate per unit area of the dots is 6% or more.

The present invention resides in (7) the decorative sheet according to any one of (1) to (5) as described above, wherein a lightness in a side closer to the first bright part of the transparent sheet is viewed to be higher than that in a side close to the second bright part of the transparent sheet from an angle of depression of 45° to the transparent sheet; and a lightness in a side closer to the second bright part of the transparent sheet is viewed to be higher than that in a side closer to the first bright part of the transparent sheet from an angle of depression of 135° to the transparent sheet.

The present invention resides in (8) the decorative sheet according to any one of (1) to (5) as described above, wherein lightnesses at angles of 15°, 45°, and 110°, which are measured from the front side of the transparent sheet, based on ASTM Standard E2194-03, are different between the sides closer to the first and second bright parts of the transparent sheet.

The present invention resides in (9) the decorative sheet according to any one of (1) to (5) as described above, wherein a lightness at an angle of 15°, which is measured from the front side closer to the first bright part of the transparent sheet, based on ASTM Standard E2194-03, is lower than a lightness at an angle of 15°, which is measured from the front side closer to the second bright part of the transparent sheet, based on ASTM Standard E2194-03; and a lightness at an angle of 110°, which is measured from the front side closer to the first bright part of the transparent sheet, based on ASTM Standard E2194-03, is higher than a lightness at an angle of 110°, which is measured from the front side closer to the second bright part of the transparent sheet, based on ASTM Standard E2194-03.

The present invention resides in (10) the decorative sheet according to any one of (1) to (5) as described above, wherein a lightness at an angle of 15°, which is measured from the front side closer to the first bright part of the transparent sheet, based on ASTM Standard E2194-03, is lower by 2-40 than a lightness at an angle of 15°, which is measured from the front side closer to the second bright part of the transparent sheet, based on ASTM Standard E2194-03; and a lightness at an angle of 110°, which is measured from the front side closer to the first bright part of the transparent sheet, based on ASTM Standard E2194-03, is higher by 2-60 than a lightness at an angle of 110°, which is measured from the front side closer to the second bright part of the transparent sheet, based on ASTM Standard E2194-03.

The present invention resides in (11) the decorative sheet according to any one of (1) to (5) as described above, wherein a lightness at an angle of 15°, which is measured from the front side closer to the first bright part of the transparent sheet, based on ASTM Standard E2194-03, is 69-107; a lightness at an angle of 15°, which is measured from the front side closer to the second bright part of the transparent sheet, based on ASTM Standard E2194-03, is 101-105; a lightness at an angle of 110°, which is measured from the front side closer to the first bright part of the transparent sheet, based on ASTM Standard E2194-03, is 36-72; and a lightness at an angle of 110°, which is measured from the front side closer to the second bright part of the transparent sheet, based on ASTM Standard E2194-03, is 36-38.

The present invention resides in (12) the decorative sheet according to any one of (1) to (11) as described above, wherein a light-shielding layer for shielding light is laminated on the first bright part and the second bright part.

In addition, any configuration in which (1) to (12) as described above are appropriately combined may also be adopted if it serves the objects of the present invention.

### Advantage of the Invention

In the decorative sheet of the present invention, if the white layer is contained in either of the bright parts which adjoin each other, brightness is increased by the lightness of the color of the white layer in itself when the white layer is contained in the near side, and darkness is increased because the white layer does not reflect light when the white layer is contained in the far side. Namely, the first bright part contains the white layer but the second bright part does not contain any white layer, so that a change in brightness and darkness and an inverse effect for color occur when viewed from different angles, and the three-dimensional feeling can thus be given. In addition, the white layer is the aggregate of dots, and a rate of the dots per unit area is preferably 6% or more.
For example, the lightness of the side closer to the second bright part of the transparent sheet will be viewed to be higher than that of the side closer to the first bright part of the transparent sheet from an angle of depression of 45°, and the lightness of the side of the first bright part of the transparent sheet will be viewed to be higher than that of the side closer to the second bright part of the transparent sheet from an angle of depression of 135° to the transparent sheet.
Thus, in accordance with the above-mentioned decorative sheet, its decorative display performance is excellent with the simple structure, and the three-dimensional feeling can be given without any limitation in color.

In the decorative sheet of the present invention, the first or second bright part preferably has a plurality of color layers containing at least a bright pigment, other than the white layer, and the first and second bright parts more preferably have a plurality of color layers containing at least a bright pigment, other than the white layer, respectively. Particularly, the design and three-dimensional feeling of greater depth may be given by varying the type of the bright pigment used in each color layer.

The decorative sheet of the present invention may give various patterns by being provided newly with the color layer of the pigment (other than any bright pigment) or added to the color layer containing the bright pigment, if having the above-mentioned configuration. Namely, it is not limited in color and also has excellent display performance.

For example, when the first color layer closer to the transparent sheet of the first bright part contains a full-color pigment (other than bright pigments) employing four primary colors consisting of CMYK and the second color layer laminated on the back side of the first color layer is a white layer, the white layer (the second color layer) increases the lightness of the pigment (the first color layer), and the brightness and the darkness and the inverse effect may therefore be given more clearly. In addition, further lamination of a third color layer containing a bright pigment on the back side of the second color layer is more effective.

In the decorative sheet of the present invention, when the lightnesses of the sides closer to the first and second bright parts of the transparent sheet, at angles of 15°, 45°, and 110°, measured from the side front of the transparent sheet based on ASTM Standard E2194-03 have the relationships or are the values as described above, the obtainment of the brightness and the darkness and the inverse effect is secured. Here, the lightness is measured according to JIS Z8729 and corresponds to an L-value in the Lab color system.

In the decorative sheet of the present invention, when the light-shielding layer for shielding light is laminated on the first and second bright parts, exfoliation of the first and second bright parts may be inhibited, and display of depth may also be given in design characteristics.

### Brief Description of the Drawings

[Figure 1] Figure 1 is a cross-sectional view schematically illustrating a first embodiment of the decorative sheet according to the present invention.
[Figure 2] Figure 2 is a schematic view illustrating the state of measuring the lightness of the decorative sheet according to the present embodiment, based on ASTM Standard E2194-03.
[Figure 3] Figure 3 is a plan view of the white layer of the decorative sheet according to the present embodiment.
[Figure 4] Figure 4 is a cross-sectional view schematically illustrating a second embodiment of the decorative sheet according to the present invention.
[Figure 5] Figure 5 is a cross-sectional view schematically illustrating a third embodiment of the decorative sheet according to the present invention.
[Figure 6] Figure 6 is a cross-sectional view schematically illustrating a fourth embodiment of the decorative sheet according to the present invention.
[Figure 7] Figure 7 is a cross-sectional view schematically illustrating a fifth embodiment of the decorative sheet according to the present invention.
[Figure 8] Figure 8 is a cross-sectional view schematically illustrating a sixth embodiment of the decorative sheet according to the present invention.
[Figure 9] Figure 9 is a cross-sectional view schematically illustrating a seventh embodiment of the decorative sheet according to the present invention.
[Figure 10] Figure 10 is a graph illustrating a relationship between the concentrations of titanium white ink (white layer) and UV offset ink (layer comprising a bright pigment) and the lightness (L-value) at 15° in the first bright part in Example.
[Figure 11] Figure 11 is a graph illustrating a relationship between the concentrations of titanium white ink (white layer) and UV offset ink (layer comprising a bright pigment) and the lightness (L-value) at 110° in the first bright part in Example.
[Figure 12] Figure 12 is a graph illustrating a relationship between the concentration of UV offset ink (layer comprising a bright pigment) and the lightness (L-value) at 15° in the second bright part in Example.
[Figure 13] Figure 13 is a graph illustrating a relationship between the concentration of UV offset ink (layer comprising a bright pigment) and the lightness (L-value) at 1101° in the second bright part in Example.
[Figure 14] Figure 14 is a photograph of an example of the decorative sheet prepared by using the principle of the present invention.

### Best Mode for Carrying Out the Invention

Preferred embodiments of the present invention will be described in detail below while referring to figures, as needed. In the figures, the same elements are assigned the same reference numerals, and an overlapped description is omitted. Further, a dimensional ratio in the figures is not limited to a ratio as illustrated.

### [First Embodiment]

First, the first embodiment of the decorative sheet of the present invention is described.

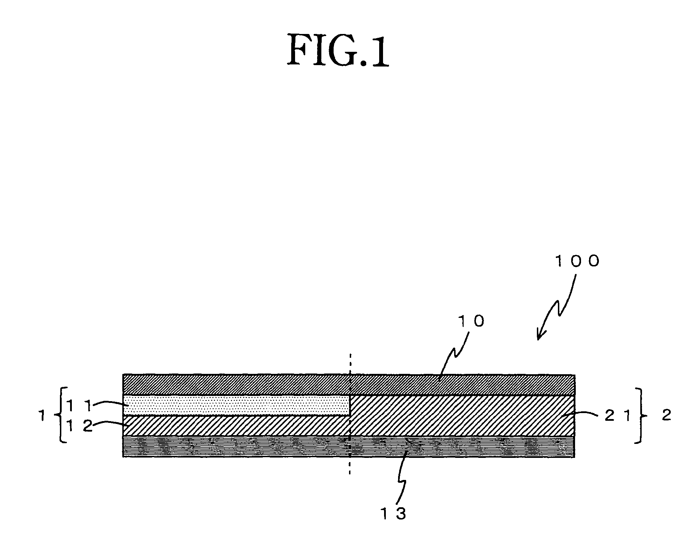

FIG. 1 is the cross-sectional view schematically illustrating the first embodiment of the decorative sheet according to the present invention.
As illustrated in FIG. 1, the decorative sheet 100 according to the present embodiment comprises a transparent sheet 10, a first bright part 1 formed on the back side of the transparent sheet 10, a second bright part 2 which is formed on the back side of the transparent sheet 10 and adjoins the first bright part 1, and a light-shielding layer 13 formed on the back sides of the first bright part 1 and the second bright part 2. In addition, in the decorative sheet 100 illustrated in FIG. 1, the back sides of the first bright part 1 and the second bright part 2 form a step, but this is conveniently shown to understand a cross section structure, and the first bright part 1 and the second bright part 2 are extremely thin, so that, actually, they substantially flush with each other.

In addition, the first bright part 1 has a plurality of color layers, a first color layer 11 closer to the transparent sheet 10 of the first bright part 1 is a white layer, and the second color layer 12 laminated on the back side of the first color layer 11 is a layer containing a bright pigment. In addition, the details of them are described below.

The above-mentioned decorative sheet 100 preferably has a thickness of 100-300 µm in terms of handleability such as affixation to an object when it is in film form and preferably has a thickness of 0.2-0.5 mm in terms of strength when it is in plate form.

In the above-mentioned decorative sheet 100, the lightnesses measured from the front side of the transparent sheet at angles of 15°, 45°, and 110°, based on ASTM Standard E2194-03, are different between the sides closer to the first bright part 1 and the second bright part 2 of the transparent sheet 10.

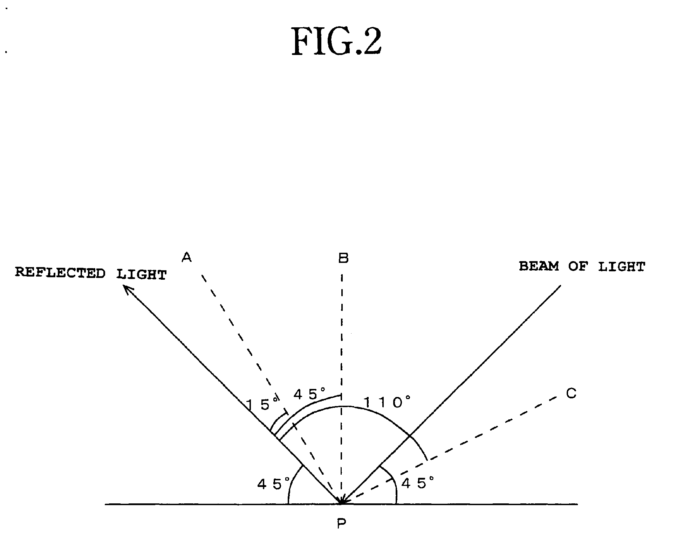

FIG. 2 is the schematic view illustrating the state of measuring the lightness of the decorative sheet according to the present embodiment, based on ASTM Standard E2194-03.
As illustrated in FIG. 2, in accordance with ASTM Standard E2194-03, a measurement point P is irradiated at an angle of 45° from a light source, and Labs are measured at a position A at 15°, a position B at 45°, and a position C at 110° with respect to the angle of regular reflection from the light source.

In the above-mentioned decorative sheet 100, a lightness at the angle of 15° (position A) measured from the front side closer to the first bright part 1 of the transparent sheet 10, based on ASTM Standard E2194-03, is preferably lower than that at the angle of 15° (position A) measured from the front side closer to the second bright part 2 of the transparent sheet 10, and a lightness at the angle of 110° (position C) measured from the front side closer to the first bright part 1 of the transparent sheet 10 is preferably higher than that at the angle of 110° (position C) measured from the front side closer to the second bright part 2 of the transparent sheet 10.
In this case, inverse effects for brightness and darkness are obtained at the positions A and C, and a three-dimensional feeling can therefore be given.

In the above-mentioned decorative sheet 100, a lightness at the angle of 15° (position A) measured from the front side closer to the first bright part 1 of the transparent sheet 10, based on ASTM Standard E2194-03, is preferably lower by 2-40 than that at the angle of 15° (position A) measured from the front side closer to the second bright part 2 of transparent sheet 10, and a lightness at the angle of 110° (position C) measured from the front side closer to the first bright part 1 of the transparent sheet 10 is preferably higher by 2-60 than that at the angle of 110° (position C) measured from the front side closer to the second bright part 2.
When the differences between the lightnesses of the sides closer to the first bright part 1 and the second bright part 2 at the same positions A and C are within the above-mentioned ranges, the differences between brightness and darkness viewed from the same positions may more clearly be given. Namely, depth may more clearly be given.

Specifically, in the above-mentioned decorative sheet 100, a lightness at the angle of 15° (position A) measured from the front side closer to the first bright part 1 of the transparent sheet 10, based on ASTM Standard E2194-03, is preferably 69-107, a lightness at the angle of 110° (position C) is preferably 36-72, a lightness at the angle of 15° (position A) measured from the front side of the second bright part 2 of the transparent sheet 10 is preferably 101-105, and a lightness at the angle of 110° (position C) is preferably 36-38.

In accordance with the decorative sheet 100 according to the present embodiment, a change in brightness and darkness and an inverse effect for color occur when viewed from different angles, and a three-dimensional feeling may be given. Thus, decorative display performance is excellent with a simple structure, and the three-dimensional feeling may be given without any limitation in color.

The transparent sheet 10, the first bright part 1, the second bright part 2, and the light-shielding layer 13 are described in detail below.
(Transparent sheet)
It is essential only that the transparent sheet 10 be in transparent film or plate form, and it is not particularly limited in thickness.
Specifically, examples of the transparent sheet 10 in film form include polyethylene films, polypropylene films, polyethylene terephthalate films, polybutylene terephthalate films, polyethylene naphthalate films, polycarbonate films, polymethyl methacrylate films, ethylene-vinyl acetate copolymer films, polystyrene films, polyimide films, polyamide films, polysulfone films, polyether sulfone films, polyether ketone films, polyvinyl alcohol films, polyvinyl chloride films, polyvinylidene chloride films, triacetylcellulose films, polyurethane films, cycloolefin polymer films and the like.
The transparent sheet 10 may be a film produced by mixing these raw materials or may be a laminate thereof.
Among them, as the transparent sheet 10, the polyethylene films, the polypropylene films, the polyethylene terephthalate films, and the polycarbonate films are preferred in terms of versatility.

Examples of the transparent sheet 10 in plate form include glass, acrylic sheets, polyethylene terephthalate sheets, polycarbonate sheets, polyvinyl chloride sheets, ABS sheets, styrol sheets and the like.
Among them, as the transparent sheet 10, the acrylic sheets and the polycarbonate sheets are preferred in terms of versatility.

An adhesive layer (not shown) composed of an adhesive may be placed on the back side of the transparent sheet 10 so as not to inhibit transparency in order to improve adhesiveness between the first color layer 11 and the second color layer 12.
Such adhesives used are known and include acrylic resin adhesives, olefin resin adhesives, urethane resin adhesives, ethylene-vinyl acetate resin adhesives, epoxy resin adhesives, vinyl chloride resin adhesives, chloroprene rubber adhesives, vinyl acetate resin adhesives, silicone-based adhesives, styrene-butadiene rubber adhesives, phenolic resin adhesives, polyvinyl alcohol adhesives, polyamide resin adhesives and the like. They may be used alone or in a mixture of two or more of them.
In addition, corona discharge treatment, plasma treatment, blaster treatment, or the like, of the back side of the transparent sheet 10 may also be performed so as not to inhibit transparency in order to improve adhesiveness between the first color layer 11 and the second color layer 12.
Furthermore, the transparent sheet 10 may contain an ultraviolet absorber, a flame retardant, a pigment other than any bright pigment, or the like, so as not to inhibit transparency.

### (First bright part)

The first bright part 1 has the plurality of color layers and specifically has a structure in which the first color layer 11 and the second color layer 12 are laminated in this order on the transparent sheet 10.

### The first color layer 11 is a white layer.

Here, in accordance with the present invention, the white layer contains white of a pigment other than any bright pigment as the main component and means one with an L-value (multiangle of 45°) in the solid pattern of white, of 50-100. In addition, a and b values in this case are not particularly limited. In the case of not solid pattern but dot form (halftone dots), the L-value may also be 50 or less.
In the white of the white layer, for example, a known white pigment such as zinc oxide or titanium dioxide is used.

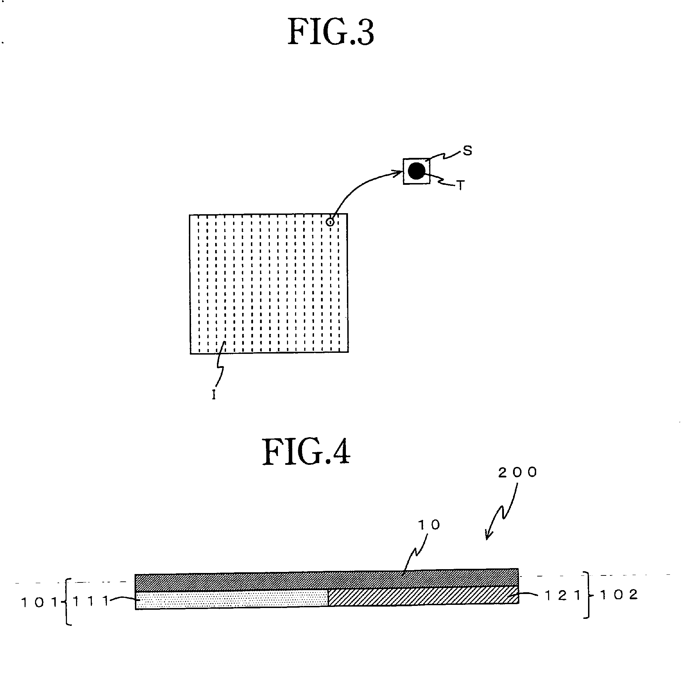

FIG. 3 is the plan view of the white layer of the decorative sheet according to the present embodiment.
As illustrated in FIG. 3, the white layer of the first color layer 11 is the aggregate of the dots. Namely, the dots are arranged in a -row at regular spacings to make a line I, and such lines I are adjacently arranged at spacings of 65-300 lines/inch to form the white layer. In addition, for example, when the lines I are not adjacently arranged in such a case as an FM screen or inkjet, those with display performance equivalent to that of those in which the lines I are adjacently arranged at spacings of 65-300 lines/inch are contained in the white layer.

In the above-mentioned white layer, a rate of the dots T per unit area S is preferably 6% or more, more preferably 30% or more, and particularly preferably 70% or more.
In this case, a change in brightness and darkness and an inverse effect for color more significantly occur when the decorative sheet 100 is viewed from different angles. In addition, the case in which a rate (T/S) of the dots T per unit area S is 1 (namely, 100%) means a solid pattern.

The first color layer 11 preferably contains a binder as well as the white pigment. In this case, adhesiveness with the transparent sheet 10 is improved.
Such binders include ultraviolet curable resins, solvent-based resins, water-based resins, and the like.

Such ultraviolet curable resins, which may be exemplified by commercially available ones, include, for example, epoxy(meth)acrylate, urethane(meth)acrylate, polyester(meth)acrylate, and the like. They may be used alone or in a mixture of two or more of them.
Such solvent-based resins include, for example, polyester resins, acrylic vinyl chloride resins, urethane vinyl chloride resins, vinyl chloride resins, vinyl acetate resins, cellulose nitrate resins, fluorine resins, polyurethane resins, and the like. They may be used alone or in a mixture of two or more of them.
Such water-based resins include, for example, acrylic resins, polyester resins, urethane resins, polyurethane emulsions, and the like. They may be water-based, emulsions, or dispersions. They may also be used alone or in a mixture of two or more of them.

The second color layer 12 contains a bright pigment for improving lightness.
Bright pigments include pearl pigments, mica flake pigments composed of natural muscovite or synthetic mica, metallic oxide-coated mica flake pigments, aluminum flake pigments, alumina flake pigments, metallic oxide-coated alumina flake pigments, graphite pigments, titanium metal flake pigments, stainless flake pigments, plate-like iron oxide pigments, phthalocyanine flake pigments, metallic oxide-coated silica flake pigments, metallic oxide-coated glass flake pigments, metal-plated glass flake pigments, metallic oxide-plated glass flake pigments, hologram pigments, and the like. They may be used alone or in a mixture of two or more of them. In addition, "metal-coated" and "metal oxide-coated" mean being coated with a thin film of metal (oxide) such as titanium dioxide, iron oxide, chromium, cobalt, tin, or zirconium, and "metal-plated" and "metal oxide-plated" mean being plated with these metals (oxides).

The bright pigment preferably has an average particle diameter of 10-200 µm.
When the average particle diameter is less than 10 µm, sufficient luminance may not be obtained, compared with the case in which the average particle diameter is in the above-mentioned range, and when the average particle diameter is more than 200 µm, there is a fear of producing roughened particles or rough deposits on the surface of the second color layer 12, compared with the case in which the average particle diameter is in the above-mentioned range.

The second color layer 12 is an aggregate of dots as in the case of the first color layer 11 as described above.
Here, lines which are adjacently arranged on the second color layer 12 are preferably in a direction different from the direction of the lines which are adjacently arranged on the first color layer 11. In this case, the effect of the white layer may more surely be exerted.

The second color layer 12 preferably contains a binder as in the case of the above-mentioned first color layer 11. Such a binder is synonymous with a binder in the first color layer 11.
In addition, the second color layer 12 may also contain a pigment other than any bright pigment. The details of such a pigment other than any bright pigment are described below.
The decorative sheet 100 contains the pigment other than any bright pigment and can therefore give various patterns as well as brightness and darkness. Thus, its color is not limited, and its display performance is also excellent.

### (Second bright part)

The second bright part 2 has a structure in which the first color layer 21 is laminated on the transparent sheet 10. In addition, the second color layer 12 of the first bright part 1 and the first color layer 21 of the second bright part 2 are identical and are formed on the back side of the transparent sheet 10 so as to substantially flush with each other.

The first color layer 21 contains a bright pigment as in the case of the second color layer 12 of the first bright part 1. In addition, the bright pigment that is contained in the second color layer 12 of the first bright part 1 and the bright pigment that is contained in the first color layer 21 of the second bright part 2 may be identical. Namely, even in the case of the identical bright pigment, the first bright part 1 contains the white layer and is therefor viewed differently.
The bright pigment also preferably has an average particle diameter of 10-200 µm.

The first color layer 21 preferably contains a binder as in the case of the second color layer 12 of the first bright part 1 and may also contain a pigment other than any bright pigment.

### (Light-shielding layer)

The light-shielding layer 13 is laminated on the first and second bright parts.
When the light-shielding layer 13 is laminated, exfoliation between the first bright part 1 and the second bright part 2 may be inhibited, and display of depth may also be given in design characteristics.

In such a light-shielding layer 13, known carbon black is used.
The light-shielding layer 13 may also contain a pigment or the like other than any binder, ultraviolet absorber, flame retardant, and bright pigment. In addition, such a binder is synonymous with the binder in the first color layer 11.

In the decorative sheet 100 according to the present embodiment, the first bright part 1 contains the white layer but the second bright part 2 does not contain any white layer, so that a change in brightness and darkness and an inverse effect for color may clearly be given when viewed from different angles.
For example, the lightness of the first bright part 1 will be viewed to be higher than that of the second bright part 2 from an angle of depression of 45°, and the lightness of the second bright part will be viewed to be higher than that of the first bright part from an angle of depression of 135° to the transparent sheet 10.

The above-mentioned decorative sheet 100 is preferably used in applications such as decoration of mobile phones, interior decoration of automobiles, and decoration of electric appliances.
In addition, when the above-mentioned decorative sheet 100 is affixed to an article to be affixed, it is essential only to affix the decorative sheet 100 using a pressure sensitive adhesive. As the pressure sensitive adhesive, e.g., acrylic, rubber, polyalkyl silicon, urethane, and polyester adhesives are preferably used.

The method for producing the decorative sheet 100 is described below.
First, the transparent sheet 10 is prepared. In addition, as needed, an adhesive layer is placed on the back side of the transparent sheet 10, or the plasma or blast treatment of the back side of the transparent sheet 10 is performed in order to improve adhesiveness.

In addition, a first liquid mixture containing a bright pigment and a binder is applied to the back side of the transparent sheet 10.
A content of the bright pigment contained in the first liquid mixture is preferably 10-60 mass% in terms of handleability.

When the binder is an ultraviolet curable resin, a monomer or an oligomer is contained in the first liquid mixture.
The monomer or the oligomer has a polymerizable reactive group. Such polymerizable reactive groups include, e.g., acryloyl, methacryloyl, vinyl, allyl, mercapto, and amino groups. Particularly, the acryloyl and methacryloyl groups are preferably used because of having high reactivity.
The ultraviolet curable resin is obtained by curing the abode-mentioned polymerizable reactive group by ultraviolet rays.

Specific examples of the monomer include, for example, unsaturated polyester, epoxy acrylate, urethane acrylate, urethane methacrylate, polyester acrylate, alkyd acrylate, silicone acrylate, polyene-polythiol type spiran, amino alkyd, hydroxyethyl acrylate, vinyl ether, and the like. They may be used alone or in a mixture of two or more of them.

In this case, a polymerization initiator or a photosensitizer may also be added as needed. Polymerization initiators include, for example, benzoyl ether, 1-hydroxycyclohexyl phenyl ketone, 2-methyl-1-(4-(methylthio)phenyl)-2-morpholinopropane-1-one, 2,2-dimethoxy-1,2-diphenylethane-1-one, benzophenone, thioxanthone, xanthone, 2-chlorothioxanthone, Michler's ketone, 2-isopropylthioxanthone, benzil, 9,10-phenanthrenequinone, 9,10-anthraquinone, and the like. They may be used alone or in a mixture of two or more of them.

Photosensitizers include triethylamine, diethylamine, N-methyldlethanolamine, ethanolamine, 4-dimethylaminobenzoic acid, methyl 4-dimethylaminobenzoate, ethyl 4-dimethylaminobenzoate, isoamyl 4-dimethylaminobenzoate, and the like. They may be used alone or in a mixture of two or more of them.

A method for applying the first liquid mixture to the transparent sheet 10 is not particularly limited and uses, for example, an offset coater, a gravure coater, an inkjet, a screen, a flexo coater, a roll coater, a knife coater, a comma coater, a spray, and the like.

In addition, the first color layer 11 of the first bright part 1 and the second color layer 21 of the second bright part 2 are formed by curing the first liquid mixture.

Subsequently, a second liquid mixture containing a white pigment, a binder, and the like is applied to the back side of the first color layer 11 of the first bright part 1. In addition, this is as described above when the binder is an ultraviolet curable resin.
A content of the white pigment contained in the second liquid mixture is preferably 10-60 mass% in terms of handleability.

A method for applying the second liquid mixture to the back side of the first color layer 11 of the first bright part 1 is not particularly limited and uses, for example, an offset coater, a gravure coater, an inkjet, a screen, a flexo coater, a roll coater, a knife coater, a comma coater, a spray, and the like.

In addition, the second color layer 12 of the first bright part 1 is formed by curing the second liquid mixture.

Subsequently, a third liquid mixture containing carbon black, a binder, and the like is applied to the back side of the second color layer 12 of the first bright part 1 and the first color layer 21 layer of the second bright part 2. In addition, this is as described above when the binder is an ultraviolet curable resin.

A method for applying the third liquid mixture is not particularly limited and uses, for example, an offset coater, a gravure coater, an inkjet, a screen, a flexo coater, a roll coater, a knife coater, a comma coater, a spray, and the like.

In addition, the light-shielding layer 13 is formed by curing the third liquid mixture. In such a manner, the decorative sheet 100 according to the present embodiment is obtained.

### [Second Embodiment]

The second embodiment of the decorative sheet of the present invention is described below.
FIG. 4 is the cross-sectional view schematically illustrating the second embodiment of the decorative sheet according to the present invention.
As illustrated in FIG. 4, a decorative sheet 200 according to the present embodiment comprises a transparent sheet 10, a first bright part 101 formed on the back side of the transparent sheet 10, and a second bright part 102 which is formed on the back side of the transparent sheet 10 and adjoins the first bright part 101.

In the above-mentioned decorative sheet 200, the first bright part 101 is composed of a first color layer 111 which is a white layer, and the second bright part 102 is composed of a first color layer 121 containing a bright pigment. Namely, the decorative sheet 200 is similar to the decorative sheet 100 according to the first embodiment except that it has no light-shielding layer 13 and the first bright part 101 has no second color layer.

According to the above-mentioned decorative sheet 200, for example, even if a color number is one, excellent design characteristics and also a three-dimensional feeling may be given by using a white layer.

### [Third Embodiment]

The third embodiment of the decorative sheet of the present invention is described below.

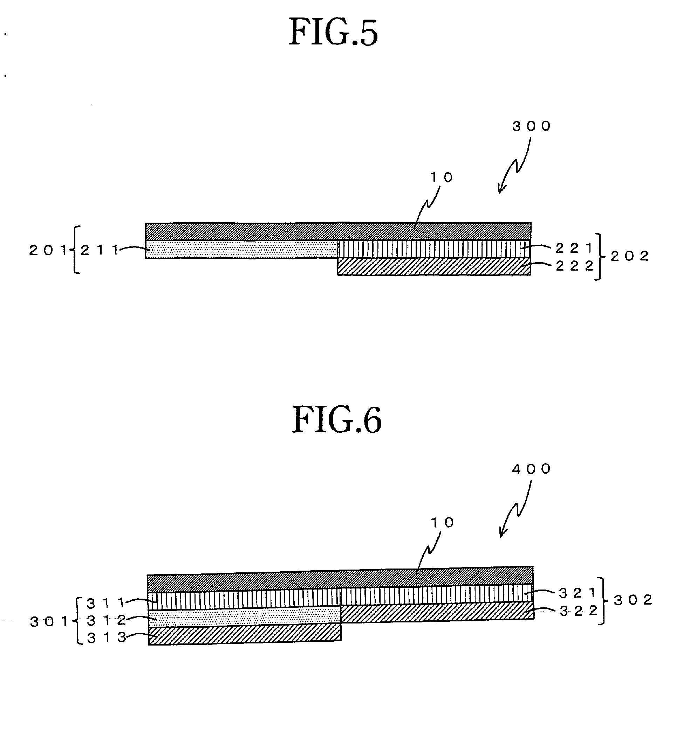

FIG. 5 is the cross-sectional view schematically illustrating the third embodiment of the decorative sheet according to the present invention.
As illustrated in FIG. 5, a decorative sheet 300 according-to the present embodiment comprises a transparent sheet 10, a first bright part 201 formed on the back side of the transparent sheet 10, and a second bright part 202 which is formed on the back side of the transparent sheet 10 and adjoins the first bright part 201. In addition, in the decorative sheet 300 illustrated in FIG. 5, the back sides of the first bright part 201 and the second bright part 202 form a step, but this is conveniently shown to understand a cross section structure, and the first bright part 201 and the second bright part 202 are extremely thin, so that, actually, they substantially flush with each other.

In the above-mentioned decorative sheet 300, the first bright part 201 is composed of a first color layer 211 which is a white layer, and the second bright part 202 is composed of a first color layer 221 containing a pigment other than any bright pigment and a second color layer 222 which is laminated on the back side of the first color layer 221 and contains a bright pigment. Namely, the decorative sheet 300 is similar to the decorative sheet 200 according to the second embodiment except that the second bright part 202 has the first color layer 221 containing the pigment other than any bright pigment.

Pigments other than any bright pigment include known ones such as inorganic pigments such as natural inorganic pigments and synthetic inorganic pigments, organic pigments such as azo pigments and polycyclic pigments, and lake pigments. Such pigments may be used alone or in a mixture of two or more of them.

The first color layer 221 is an aggregate of dots.
Here, lines which are adjacently arranged on the first color layer 221 are preferably in a direction different from the direction of the lines which are adjacently arranged on the second color layer 222.

The first color layer 221 preferably contains a binder. Such a binder is synonymous with the binder in the first color layer 11 of the first bright part 1 of the decorative sheet 100 according to the first embodiment.

According to the above-mentioned decorative sheet 300, the first color layer 221 containing the pigment other than any bright pigment is placed between the second color layer 222 containing the bright pigment and the transparent sheet 10 in the second bright part 202, and display which is extremely excellent in design characteristics is therefore enabled due to variations in different pigments, a combination with the bright pigment, and a brightness and darkness effect by the white layer. In addition, the decorative sheet 300 may also give a full-color design employing four primary colors consisting of CMYK because the first color layer 221 containing the pigment other than any bright pigment is placed on the second color layer 222 containing the bright pigment in the second bright part 202.

### [Fourth Embodiment]

The fourth embodiment of the decorative sheet of the present invention is described below.
FIG. 6 is the cross-sectional view schematically illustrating the fourth embodiment of the decorative sheet according to the present invention.
As illustrated in FIG. 6, a decorative sheet 400 according to the present embodiment comprises a transparent sheet 10, a first bright part 301 formed on the back side of the transparent sheet 10, and a second bright part 302 which is formed on the back side of the transparent sheet 10 and adjoins the first bright part 301. In addition, in the decorative sheet 400 illustrated in FIG. 6, the back sides of the first bright part 301 and the second bright part 302 form a step, but this is conveniently shown to understand a cross section structure, and the first bright part 301 and the second bright part 302 are extremely thin, so that, actually, they substantially flush with each other.

In the above-mentioned decorative sheet 400, the first bright part 301 and the second bright part 302 have a plurality of color layers. The first bright part 301 is composed of the first color layer 311 containing a pigment other than any bright pigment, the second color layer 312 which is a white layer laminated on the back side of the first color layer 311, and the third color layer 313 which is laminated on the back side of the second color layer 312 and contains a bright pigment, and the second bright part 302 is composed of the first color layer 321 containing a pigment other than any bright pigment and the second color layer 322 which is laminated on the back side of the first color layer 321 and contains a bright pigment. Namely, the decorative sheet 400 is similar to the decorative sheet 300 according to the third embodiment except that the first bright part 301 has the first color layer 311 containing the pigment other than any bright pigment and the third color layer 313 containing the bright pigment.

According to the above-mentioned decorative sheet 400, display which is extremely excellent in design characteristics is enabled due to variations in different pigments, a combination with the bright pigment, and a brightness and darkness effect by the white layer. In addition, the decorative sheet 400 may also give a full-color design employing four primary colors consisting of CMYK and having a variation in brightness and darkness because, in the first bright part 301, the second color layer 312 which is the white layer is placed on the third color layer 31 containing the bright pigment and the first color layer 311 containing the pigment other than any bright pigment is placed thereon.

### [Fifth Embodiment]

The fifth embodiment of the decorative sheet of the present invention is described below.

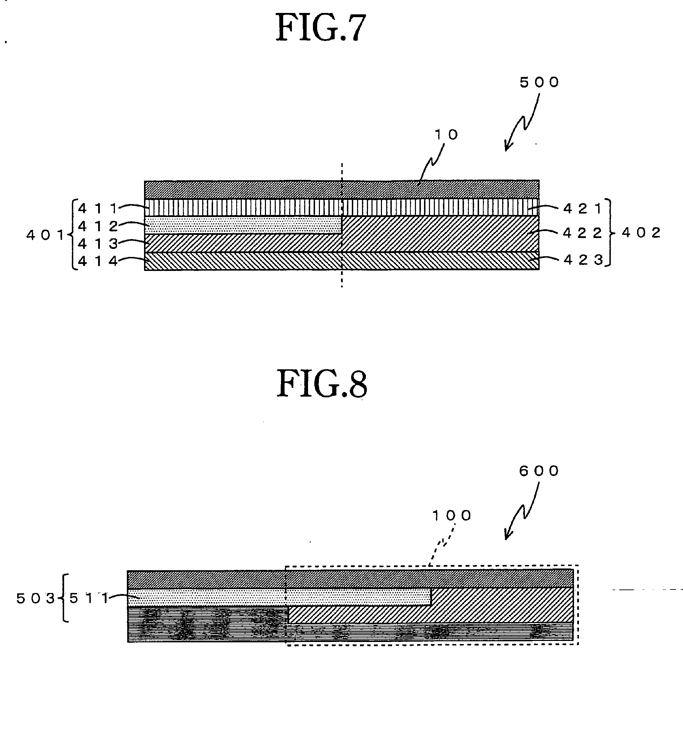

FIG. 7 is the cross-sectional view schematically illustrating the fifth embodiment of the decorative sheet according to the present invention.
As illustrated in FIG. 7, a decorative sheet 500 according to the present embodiment comprises a transparent sheet 10, a first bright part 401 formed on the back side of the transparent sheet 10, and a second bright part 402 which is formed on the back side of the transparent sheet 10 and adjoins the first bright part 401.

In the above-mentioned decorative sheet 500, the first bright part 401 and the second bright part 402 have a plurality of color layers. The first bright part 401 is composed of the first color layer 411 containing a pigment other than any bright pigment, the second color layer 412 which is a white layer laminated on the back side of the first color layer 411, the third color layer 413 which is laminated on the back side of the second color layer 412 and contains a bright pigment, and the fourth color layer 414 which is laminated on the back side of the third color layer 413 and contains a bright pigment, and the second bright part 402 is composed of the first color layer 421 containing a pigment other than any bright pigment, the second color layer 422 which is laminated on the back side of the first color layer 421 and contains a bright pigment, and the third color layer 423 which is laminated on the back side of the second color layer 422 and contains a bright pigment. Namely, the decorative sheet 500 is similar to the decorative sheet 300 according to the sixth embodiment except that the first bright part 401 has the fourth color layer 414 containing the bright pigment, the second bright part 402 has the third color layer 423 containing the bright pigment, the first color layer 411 of the first bright part 401 and the first color layer 421 of the second bright part 402 form the identical layer, the third color layer 413 of the first bright part 401 and the second color layer 422 of the second bright part 402 form the identical layer, and the fourth color layer 414 of the first bright part 401 and the third color layer 423 of the second bright part 402 form the identical layer.
The bright pigments used in the third color layer 413 of the first bright part 401 and the second color layer 422 of the second bright part 402 are particularly preferably different from the bright pigments used in the fourth color layer 414 of the first bright part 401 and the third color layer 423 of the second bright part 402. In this case, a design of more depth can be given.

According to the above-mentioned decorative sheet 500, display which is extremely excellent in design characteristics is enabled due to variations in different pigments, a combination with the bright pigment, and a brightness and darkness effect by the white layer. In addition, the decorative sheet 500 may also give a full-color design employing four primary colors consisting of CMYK and having a variation in brightness and darkness because, in the first bright part 401, the second color layer 412 which is the white layer is placed on the third color layer 413 and the fourth color layer 414 containing the bright pigments and the first color layer 411 containing the pigment other than any bright pigment is placed thereon. In addition, it is more easily produced than the decorative sheet 400 according to the fourth embodiment.

### [Sixth Embodiment]

The sixth embodiment of the decorative sheet of the present invention is described below.
FIG. 8 is the cross-sectional view schematically illustrating the sixth embodiment of the decorative sheet according to the present invention.
As illustrated in FIG. 8, in a decorative sheet 600 according to the present embodiment, a third bright part 503 is further placed on the decorative sheet 100 according to the first embodiment.
The first color layer 511 of the third bright part 503 is same as the first color layer 11 which is the white layer of the first bright part 1 of the decorative sheet 100 according to the first embodiment, and they form the identical layer.

According to the above-mentioned decorative sheet 600, even with an extremely simple structure, decorative display performance is excellent, and a three-dimensional feeling can be given without any limitation in color.

### [Seventh Embodiment]

The seventh embodiment of the decorative sheet of the present invention is described below.

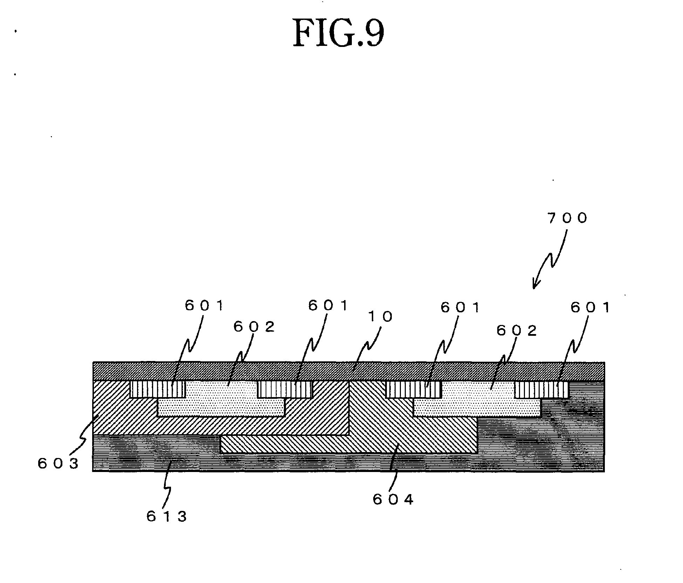

FIG. 9 is the cross-sectional view schematically illustrating the seventh embodiment of the decorative sheet according to the present invention.
The decorative sheet 700 illustrated in FIG. 9 is an example of a design in which a plurality of bright parts are placed. In FIG. 9, a layer 601 is a layer containing a pigment other than any bright pigment, a layer 602 is a white layer, and a layer 603 and a layer 604 are layers containing a bright pigment. In addition, in the decorative sheet 700, a light-shielding layer 613 is placed on the back sides of them.

According to the above-mentioned decorative sheet 700, even with an extremely simple structure, decorative display performance is excellent, and a three-dimensional feeling can be given without any limitation in color.

### Examples

The present invention is further specifically described below with reference to Examples but is not limited to these Examples.

### (Examples)

The samples of the decorative sheet were produced as described below.
As the transparent sheet, a transparent polycarbonate film (with an adhesive layer, thickness of 0.25 mm) was prepared.
Titanium white ink was applied to the back side of the transparent sheet, was thereafter subjected to UV irradiation, and was cured. In addition, UV offset ink (silver) was applied with a UV offset printing machine to it so as to be overlapped with a part thereof, followed by performing UV irradiation to cure it, and UV screen ink (silver) was applied with a screen printing machine in the same manner, followed by performing UV irradiation to cure it. In addition, the color of the UV offset ink (silver) is slightly different from that of the UV screen ink (silver).
As a result, a first bright part, on which a white layer and a plurality of layers comprising bright pigments were formed, and a second bright part, on which only a plurality of layers comprising bright pigments were formed, were formed on the back side of the transparent sheet. In addition, this corresponds to one prepared by removing the first color layer 411 of the first bright part 401 and the first color layer 421 of the second bright part 402 from the decorative sheet 500 illustrated in FIG. 7.
Also, those with varying concentrations per unit area of titanium white ink and UV offset ink (rate of dots) as listed in Table 1 and Table 2 were produced in the same manner.

### (Evaluation Method)

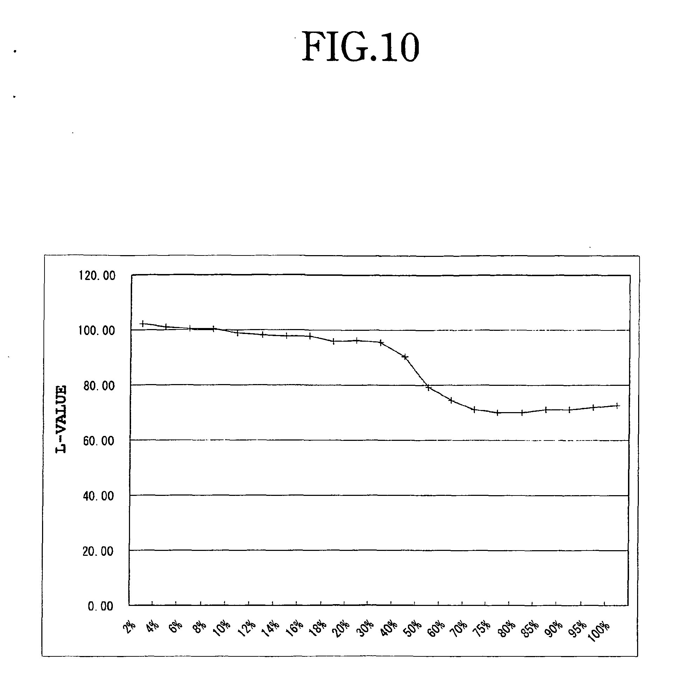

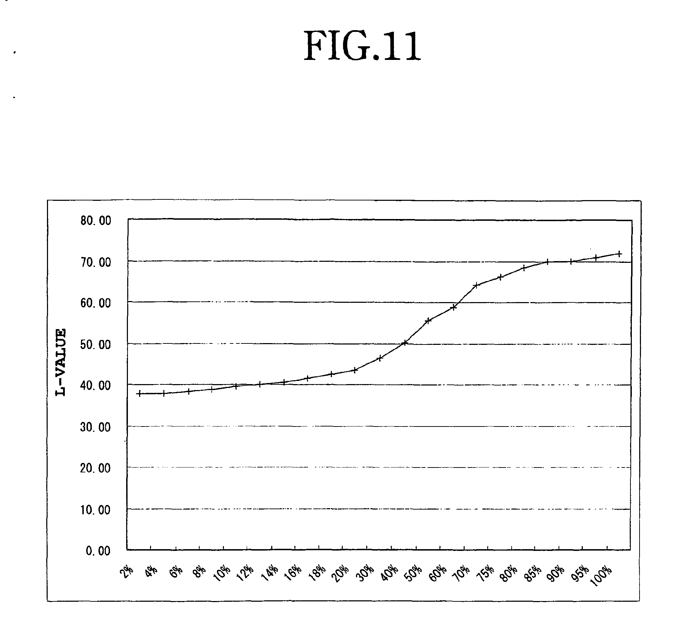

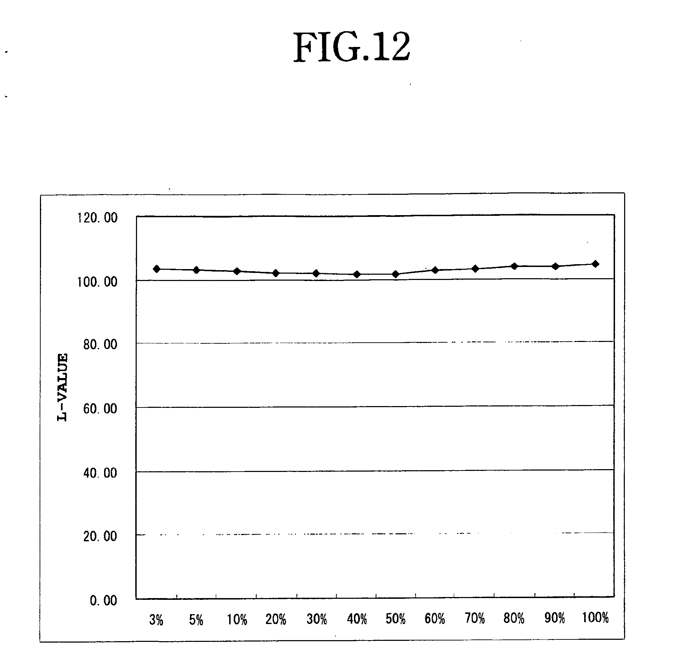

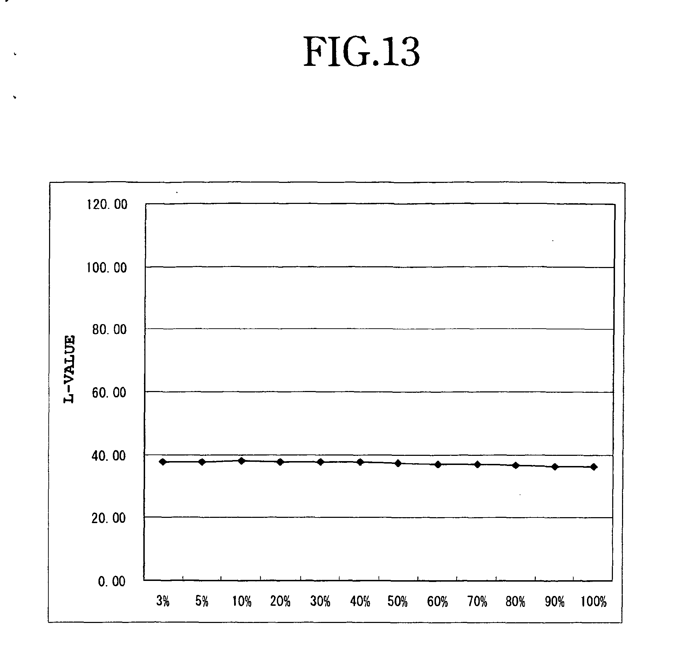

The lightnesses (L-values) at angles of 15° and 110° with respect to the front sides of the first bright part and the second bright part in the transparent sheet were measured based on ASTM Standard E2194-03.
The relationships between the concentrations of the titanium white ink (white layer) and the UV offset ink (layer comprising the bright pigment) and the lightnesses (L-values) at 15° and 110° in the first bright part are listed in Table 1, and the relationships between the concentration of the UV offset ink (layer comprising the bright pigment) and the lightnesses (L-values) at 15° and 110° in the second bright part are listed in Table 2. In addition, the relationship between the concentrations of the titanium white ink (white layer) and the UV offset ink (layer comprising the bright pigment) and the lightness (L-value) at 15° in the first bright part is illustrated in FIG. 10, the relationship between the concentrations of the titanium white ink (white layer) and the UV offset ink (layer comprising the bright pigment) and the lightness (L-value) at 110° in the first bright part is illustrated in FIG. 11, the relationship between the concentration of the UV offset ink (layer comprising the bright pigment) and the lightness (L-value) at 15° in the second bright part is illustrated in FIG. 12, and the relationship between the concentration of the UV offset ink (layer comprising the bright pigment) and the lightness (L-value) at 110° in the second bright part is illustrated in FIG. 13.

**[Table 1]**

| First bright part | | | |
|---|---|---|---|
| Concentration (%) of titanium white ink | Concentration (%) of UV offset ink | Lightness (L-value) at 15° | Lightness (L-value) at 110° |
| 2 | 50 | 102.40 | 37.90 |
| 4 | 50 | 101.05 | 37.79 |
| 6 | 50 | 100.25 | 38.18 |
| 8 | 50 | 100.45 | 38.88 |
| 10 | 50 | 98.88 | 39.47 |
| 12 | 50 | 98.30 | 40.09 |
| 14 | 50 | 97.71 | 40.61 |
| 16 | 50 | 97.85 | 41.42 |
| 18 | 50 | 95.88 | 42.49 |
| 20 | 50 | 96.33 | 43.39 |
| 30 | 50 | 95.71 | 46.41 |
| 40 | 50 | 90.32 | 50.02 |
| 50 | 50 | 79.21 | 55.65 |
| 60 | 50 | 74.56 | 58.80 |
| 70 | 50 | 71.07 | 64.27 |
| 75 | 50 | 70.08 | 66.24 |
| 80 | 50 | 70.08 | 68.35 |
| 85 | 50 | 71.05 | 69.76 |
| 90 | 50 | 70.97 | 69.78 |
| 95 | 50 | 71.99 | 70. 84 |
| 100 (solid pattern) | 50 | 72.56 | 71.78 |

**[Table 2]**

| Second bright part | | |
|---|---|---|
| Concentration (%) of UV offset ink | Lightness (L-value) at 15° | Lightness (L-value) at 110° |
| 3 | 103.38 | 37.73 |
| 5 | 102.99 | 37.85 |
| 10 | 102.77 | 38.00 |
| 20 | 101.94 | 37.87 |
| 30 | 101.89 | 37.87 |
| 40 | 101.84 | 37.67 |
| 50 | 101.73 | 37.45 |
| 60 | 102.70 | 36.98 |
| 70 | 103.01 | 36.83 |
| 80 | 103.79 | 36.49 |
| 90 | 103.85 | 36.32 |
| 100 (solid pattern) | 104.45 | 36.21 |

As is clear from Tables 1 and 2 and FIGS. 9-12, in the second bright part having no white layer, the lightness (L-value) was not greatly varied even if the concentration of the bright pigment is changed.
In contrast, in the first bright part having the white layer, the lightness (L-value) was greatly varied with the concentration of the white layer.
It was clear that the white layer greatly varied the lightness particularly when the concentration of the titanium white ink was more than 6%. In addition, in the first bright part, a test, which was conducted except when the concentration of the UV offset ink was 50%, showed results similar to those as in the case of 50%. In addition, the layer formed by printed with the UV offset ink (silver) on the UV offset printing machine and the layer formed by printed with the UV screen ink (silver) on the screen printing machine were reversed to conduct a similar test, which showed similar results.

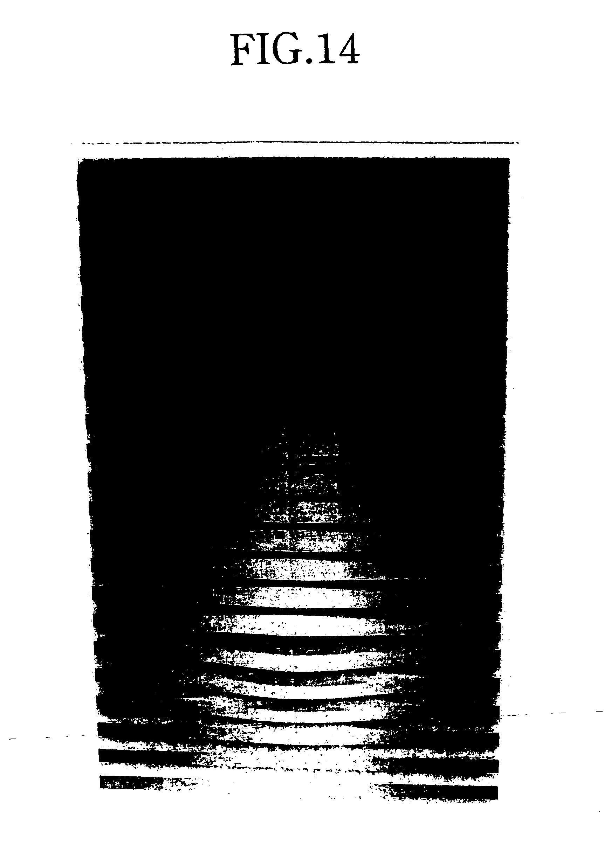

Thus, in accordance with the decorative sheet of the present invention, it may be said that the placement of the white layer enables the display of a difference between brightness and darkness when viewed from different angles and a three-dimensional feeling based on the brightness and the darkness.
In addition, FIG. 14 is the photograph of an example of the decorative sheet prepared by using the principle of the present invention.

### Industrial Applicability

The decorative sheet of the present invention is preferably used in applications such as decoration of mobile phones, interior decoration of automobiles, and decoration of electric appliances. The decorative sheet of the present invention is not limited in color, has a simple structure and excellent display performance, can give a three-dimensional feeling, and may therefore improve the design characteristics of a product affixed therewith.

### Description of Reference Numerals

1, 101, 201, 301, 401: First bright part
2, 102, 202, 302, 402: Second bright part
10: Transparent sheet
11, 21, 111, 121, 211, 221, 311, 321, 411, 421, 511: First color layer
12, 222, 312, 322, 412, 422: Second color layer
13, 613: Light-shielding layer
100, 200, 300, 400, 500, 600: Decorative sheet
313, 413, 423: Third color layer
414: Fourth color layer
503: Third bright part
601-604: Layer
A, B, C: Position
I: Line
S: Unit area
T: Dot

## Claims

1. A decorative sheet 100 comprising:
a transparent sheet 10 ;
a first bright part 1 formed on the back side of the transparent sheet 10 ; and
a second bright part 2 which is formed on the back side of the transparent sheet 10 and adjoins the first bright part 1,
wherein the first bright part 1 has at least a white layer; and
the second bright part 2 has a color layer which is other than the white layer and contains at least a bright pigment.

2. The decorative sheet 200 according to claim 1, wherein
the second bright part 202 has a plurality of color layers;
the first color layer 221 closer to the transparent sheet 10 of the second bright part 202 contains a pigment other than any bright pigment; and
the second color layer 222 laminated on the back side of the first color layer 221 contains a bright pigment.

3. The decorative sheet 100 according to claim 1 or 2, wherein
the first bright 1 part has a plurality of color layers;
the first color layer 11 closer to the transparent sheet 10 of the first bright part 1 is a white layer; and
the second color layer 12 laminated on the back side of the first color layer 11 contains a bright pigment.

4. The decorative sheet 400 according to claim 1 or 2, wherein
the first bright part 301 has a plurality of color layers;
the first color layer 311 closer to the transparent sheet 10 of the first bright part 301 contains a pigment other than any bright pigment;
the second color layer 312 laminated on the back side of the first color layer 311 is a white layer; and
the third color layer 313 laminated on the back side of the second color layer 312 contains a bright pigment.

5. The decorative sheet 500 according to any one of claims 1 to 4, wherein
the first bright part 401 and/or second bright part 402 have a plurality of color layers which are other than a white layer and contain at least a bright pigment.

6. The decorative sheet 100 according to any one of claims 1 to 5, wherein
the white layer is an aggregate of dots; and
a rate per unit area of the dots is 6% or more.

7. The decorative sheet 100 according to any one of claims 1 to 5, wherein
a lightness in a side closer to the first bright part 1 of the transparent sheet 10 is viewed to be higher than that in a side close to the second bright part 2 of the transparent sheet 10 from an angle of depression of 45° to the transparent sheet 10 ; and
a lightness in a side closer to the second bright part 2 of the transparent sheet 10 is viewed to be higher than that in a side closer to the first bright part 1 of the transparent sheet 10 from an angle of depression of 135° to the transparent sheet 10.

8. The decorative sheet 100 according to any one of claims 1 to 5, wherein
lightnesses at angles of 15°, 45°, and 110°, which are measured from the front side of the transparent sheet 10, based on ASTM Standard E2194-03, are different between the sides closer to the first bright part 1 and second bright part 2 of the transparent sheet 10.

9. The decorative sheet 100 according to any one of claims 1 to 5, wherein
a lightness at an angle of 15°, which is measured from the front side closer to the first bright part 1 of the transparent sheet 10, based on ASTM Standard E2194-03, is lower than a lightness at an angle of 15°, which is measured from the front side closer to the second bright part 2 of the transparent sheet 10, based on ASTM Standard E2194-03; and
a lightness at an angle of 110°, which is measured from the front side closer to the first bright part 1 of the transparent sheet 10, based on ASTM Standard E2194-03, is higher than a lightness at an angle of 110°, which is measured from the front side closer to the second bright part 2 of the transparent sheet 10, based on ASTM Standard E2194-03.

10. The decorative sheet 100 according to any one of claims 1 to 5, wherein
a lightness at an angle of 15°, which is measured from the front side closer to the first bright part 1 of the transparent sheet 10, based on ASTM Standard E2194-03, is lower by 2-40 than a lightness at an angle of 15°, which is measured from the front side closer to the second bright part 2 of the transparent sheet 10, based on ASTM Standard E2194-03; and
a lightness at an angle of 110°, which is measured from the front side closer to the first bright part 1 of the transparent sheet 10, based on ASTM Standard E2194-03, is higher by 2-60 than a lightness at an angle of 110°, which is measured from the front side closer to the second bright part 2 of the transparent sheet 10, based on ASTM Standard E2194-03.

11. The decorative sheet 100 according to any one of claims 1 to 5, wherein
a lightness at an angle of 15°, which is measured from the front side closer to the first bright part 1 of the transparent sheet 10, based on ASTM Standard E2194-03, is 69-107;
a lightness at an angle of 15°, which is measured from the front side closer to the second bright part 2 of the transparent sheet 10, based on ASTM Standard E2194-03, is 101-105;
a lightness at an angle of 110°, which is measured from the front side closer to the first bright part 1 of the transparent sheet 10, based on ASTM Standard E2194-03, is 36-72; and
a lightness at an angle of 110°, which is measured from the front side closer to the second bright part 2 of the transparent sheet 10, based on ASTM Standard E2194-03, is 36-38.

12. The decorative sheet 100 according to any one of claims 1 to 11, wherein a light-shielding layer 13 for shielding light is laminated on the first bright part 1 and the second bright part 2.
